# EUROPEAN PATENT SPECIFICATION

(11) **EP 1 601 722 B1**
(45) Date of publication and mention of the grant of the patent: **15.07.2009**
(21) Application number: 04712046.4
(22) Date of filing: 18.02.2004
(51) Int. Cl.: C08L 67/00, B32B 15/08

(54) **POLYMER PACKAGING LAYER WITH IMPROVED RELEASE PROPERTIES**
POLYMERVERPACKUNGSSCHICHT MIT VERBESSERTEN ABLÖSEEIGENSCHAFTEN
COUCHE D'EMBALLAGE POLYMERIQUE AUX PROPRIETES DE DECOLAGE AMELIOREES

(30) Priority: 18.02.2003 EP 03075471
(43) Date of publication of application: 07.12.2005
(73) Proprietor: Corus Staal BV, 1970 CA Ijmuiden (NL)
(72) Inventor: SPAANS, Coenraad, Jan, NL-8861 AJ Harlingen (NL); HVIID, Lene, NL-1077 ZN Amsterdam (NL); WARINGA, Cornelis, Johannes, NL-1068 PL Amsterdam (NL); DOMMERSHUIJZEN, Jacobus, NL-2017 VG Santpoort (NL)
(74) Representative: Kruit, Jan
(86) International application number: PCT/EP2004/001619
(87) International publication number: WO 2004/074376

(56) References cited:
- EP-A- 0 905 191
- EP-A- 1 086 808
- EP-A- 1 174 457
- WO-A-99/51430
- WO-A-02/076729
- US-A- 4 143 790
- US-A- 4 290 937
- US-A- 4 699 942
- DATABASE WPI Section Ch, Week 199729 Derwent Publications Ltd., London, GB; Class A23, AN 1997-315529 XP002280624 & JP 09 123352 A (KANEBO LTD) 13 May 1997 (1997-05-13)
- DATABASE WPI Section Ch, Week 200361 Derwent Publications Ltd., London, GB; Class A23, AN 2003-639048 XP002280625 & JP 2003 026824 A (UNITIKA LTD) 29 January 2003 (2003-01-29)
- DATABASE WPI Section Ch, Week 199924 Derwent Publications Ltd., London, GB; Class A23, AN 1999-282356 XP002280626 & JP 11 091054 A (MITSUBISHI CHEM CORP) 6 April 1999 (1999-04-06)
- "Polybutylene terephthalate] resin compsn. with good mould release properties - obtd. by adding olefin] polymer or fatty acid amide to polybutadiene terephthalate] resin" DERWENT, 5 July 1994 (1994-07-05), XP002237034

## Description

The invention relates to improved release of a product such as for example a food product from a product contact layer of packaging. The term packaging encompasses containers, wrappers and the like for enclosing a product and closures such as lids for such containers or wrappers. When emptying packaging filled with a sticky product, the release properties of the product contact layer play an important role in view of economy, convenience and perception of a customer of how easily the packaging can be emptied and how much product remains in the container or on the wrapping.

In food packaging in metal containers, the product contact layer that provides the release properties is conventionally a lacquer applied to the metal, the metal being in the form of e.g. tinplate or in some cases tin free steel designated as TFS or ECCS (electrolytically chrome coated steel). To provide release properties to the inside of e.g. traditional internally lacquered fish cans, special release additives are added to the product contact layer. Typical additives to achieve adequate release are wax like materials, e.g. Carnauba wax.

Recently, there has been an increasing interest in using polymer (coil) coated substrates for example polymer coated metal strip or polymer coated paper (board) instead of packaging steel with a layer of lacquer. This is particularly the case for food packaging. Commonly applied resins for such polymer coating applications are polyesters, e.g. polyethylene terephthalate (PET). However, polyesters have poor product release properties, thereby limiting the scope of their use in packaging especially where good product release properties are required, such as in e.g. wide mouth food jars or fish cans.

According to EP 1086808 which recognises this problem with PET coatings, a wax component is to be added to such a PET coating to obtain better "taking-out property" of stuffed food contents, see table 1 C2, table 2 C2 and table 3 E1-E16 and C1-C3. However, adding the waxes is expensive firstly because of the cost of such waxes and secondly because of complications in the handling and processing of the manufacture of the non-sticking polymer. Furthermore, in some cases, the use of a wax must be limited in connection with food quality and legislation issues. EP 1174457 also discloses the addition of wax compounds to polyester film for laminating metal sheet for the production of cans.

Alternatively, according to EP 1086808, see table 1 E1-E7, table 2 E1-E12, C1 and C3-C4 and table 3 C4-C5, for better "taking-out property" a coating of an apolar resin, viz. (mixtures of) a polypropylene (PP) and/or polyethylene (PE) or polytetrafluorethylene (PTFE) optionally provided with an extra layer of modified PP could be applied to the metal strip. However, it is known that these coatings are not suitable for many packaging applications, notably for foodstuffs that are sterilised or heat-treated in the packaging.

In applications where these apolar resin polymer coatings are not suitable, and where it is also undesirable to have to add waxes to a PET coating, an alternative is thus desired.

It is thus an objective to find a polymer material with a new combination of acceptable and favourable properties in order to reduce or solve the problem of stickiness of a polyester without needing to add waxes to the polyester, and/or to obtain other advantages.

According to the invention this objective is achieved by the use of a multi-layer system in accordance with claim 1.

Surprisingly, it turns out that by using such a blended material of a polyester and a polyolefin, e.g. a polyolefin such as PP or PE, which polyester and polyolefin are in principle incompatible with each other, the product release properties of the resulting polymer are greatly improved without thereby unacceptably adversity affecting other properties such as the manufacturability and processability of the polymer. Also, surprisingly, the incompatibility of the two polymers does not lead to an unacceptable loss of retort resistance and adhesion, in contrast to what is reported in literature, where generally poor mechanical and barrier properties are reported (see for example Dimitrova et al., Polymer, 41, 2000, 4817-4824).

In hindsight, the good product release properties or non-stick behaviour may be related to demixing of the polymers taking place. According to this theory the demising results in a morphology where polyolefins are dispersed in a polar polyester matrix, making the surface less polar and thereby decreasing the affinity of the coating towards sticky products such as many foodstuffs.

In all cases, the polymer material according to the invention as compared to polyester material shows improved product release properties as well as good retort resistance.

In an embodiment the polyolefin is PP. This has the advantage that the resulting polymer material is relatively cheap.

In another embodiment the polyolefin is modified PP. This achieves an improved extrusion behaviour believed to be resulting from a better compatibility of the resin with PET compared to unmodified PP.

In a further embodiment the polyolefin is maleic acid anhydride modified PP. In this way also a better interaction with the PET is obtained.

In yet another embodiment the polyolefin is PE. By choosing PE, a simple cheap polymer very similar to PP is used.

In another embodiment the polyolefin is a copolymer comprising PP and PE. This achieves a more amorphous system than the standard PP, which provides even better release characteristics.

In yet another embodiment the polyolefin is EPDM.

In an embodiment the polyester is PET (polyethylene terephthalate) or modified PET (e.g. glycol modification with CHDM and/or terephthalate modification by isophthalate) or PEI (polyethylene isophthalate) or PBT (polybutylene terephthalate) and combinations (blends and/or copolymers) thereof.

The polymer material preferably contains a blend of 5-25% PP in PET or more preferably 10 - 25 % PP in PET or even more preferably 15-25% PP in PET. At higher levels of PP In PET it becomes increasingly difficult to produce a stable polymer material.

Preferably, the polymer material according to the invention is coated on a metal substrate or sheet. A metal substrate provided with such a coating has the advantage that it can be used to manufacture metal cans for sticky products, e.g. for canned salmon, while achieving good release from the can after opening.

The polymer material can be relatively conveniently produced by feeding the respective polyester and polyolefin granulates directly into a feeding system of an extruder, taking care in the feeding system not to exceed the temperature at which the polyolefin softens or melts. The polymer material can easily be applied to substrates, which can subsequently be formed into packaging or can act as a wrapping itself. The polymer material of the present invention is particularly suitable for coating at least one side of a metal substrate, made from for example, packaging steel, which is subsequently formed into packaging. Despite the rigorous processing steps the substrate is subjected to in order to form the packaging, the product release properties of the polymer material, which forms the product contact layer of the packaging, are maintained. The sterilisability of the coating also remains intact.

The polymer material can form a single (sub) layer of a multi layer system. For very demanding retort applications, it is advisable to use a multi layer system instead of a two or one layer system. In this way, the functional layer that forms the product contact surface can be kept thin, which is favourable for coating integrity during these retort processes.

The present invention also relates to packaging for a product wherein the packaging comprises a product contact layer which In use contacts the product wherein said contact layer comprises a polymer material made from a blend of a polyester resin and a polyolefin. Such packaging has improved product release properties as compared to packaging where the contact layer comprises a polymer material made from essentially the polymer resin, whilst the polymer also has acceptable manufacturability and processability properties.

In an embodiment the polyolefin is PP. This has the advantage that the resulting polymer material is relatively cheap.

In another embodiment the polyolefin is modified PP. This achieves an improved extrusion behaviour believed to be resuming from a better compatibility of the resin with PET compared to unmodified PP.

In a further embodiment the polyolefin is maleic acid anhydride modified PP. In this way also a better interaction with the PET is obtained.

In yet another embodiment the polyolefin is PE. By choosing PE, a simple cheap polymer very similar to PP is used.

In another embodiment the polyolefin is a copolymer comprising PP and PE. This achieves a more amorphous system than the standard PP, which provides even better release characteristics.

In yet another embodiment the polyolefin is EPDM.

In an embodiment the polyester is PET (polyethylene terephthalate) or modified PET (e.g. glycol modification with CHDM and/or terephthalate modification by isophthalate) or PEI (polyethylene isophthalate) or PBT (polybutylene terephthalate) and combinations (blends and/or copolymers) thereof.

The packaging preferably comprises a metal substrate coated with the polymer material. The polymer material is preferably coated onto at least one side of the metal substrate before the substrate is formed into packaging. It has been found that the polymer material has acceptable manufacturability and forming properties and can thus be applied to a metal substrate before it has been formed into packaging. The metal substrate coated with the polymer material may be produced according to a process wherein the polymer material is extruded, made into an extrudate or film, which extrudate or film is applied to the metal sheet.

The packaging is preferably retortable. It has also been found that the polymer material of the present invention has good retort resistance as well as good product release properties and can thus be used in retortable packaging. The polymer material forms the product contact layer of a multi-layer system, whereby the polymer material can be kept thin, which is favourable for coating integrity during retort processes.

It turns out that a can made from a packaging steel coated with said polymer material according to the invention has excellent release-from-can-properties, in particular for fish based and fish products, as will be shown hereafter by way of some non-iimitative examples.

### Example 1.1 (not part of the invention)

A two layer polymer film consisting of an adhesion layer and a bulk product contact layer was made by co-extrusion from a feedblock-die system using for the bulk product contact layer a standard bottle grade PET granulate representing as reference a pure PET film, and a standard bottle grade PET granulate blended with a standard PP homopolymer MFI 12g/10min granulate at different blend ratios representing variants of the polymer having improved release properties according to the invention. MFI 12g/10min (as measured according to ISO 1133, T=230 °C, 2.16 kg) refers to the melt flow index of the PP, which indicates melt viscosity.

The polymer extrudate was coated onto a conventional steel substrate (TFS I ECCS) of 0.20 mm (normally designated as T57 CA) and the resulting coated steel sheet was made Into straight (non-tapered) food cans ∅ 65 mm and height 93 mm in a 3-step DRD process using blanks ∅ 198 mm. The 3-step draw and redraw (DRD) process used was a standard process comprising cutting a blank of ∅ 198 mm from the coated steel, drawing the blank through a die to form a cup and redrawing the cup without thinning the sidewall to form a can of ∅ 65 mm and height 93 mm.

The cans were filled with fresh, bred atlantic salmon, closed and retorted for 90 minutes in an autoclave at a temperature of 121 °C. The cans were cooled in ambient air and stored at 35 °C for one week.

Then the cans were opened, emptied and the amount of remaining salmon was measured by weight (hereafter also referred to as AR in g/can).

Furthermore, the area covered by the remaining salmon (hereafter also referred to as AC in %) was determined as the average of independent estimations by three different persons, in order to simulate perception by the consumer of the "stickiness" of the walls of the respective cans.

The results are given in table 1.1.

As follows from the results of this experiment, the blended materials of PET with PP show superior performance compared to the PET coated reference cans, the variant containing 10 % showing superior release behaviour.

As discussed in Taguchi (Bulletin of the Japanese Society of Science Fisheries 46(3) 369 (1980)), laboratory trials like these may suffer from reproducibility problems, which are possibly related to "trivial" factors like the freshness of the fish. In order to check the reproducibility of improvement of the release behaviour if the invention is practiced a second experiment with a different salmon lot was performed.

### Example 1.2 (not part of the invention)

Example 1.1 was repeated with a different batch of salmon. The results are as shown in table 1.2.

Although the results in example 1.2 differ from that of 1.1 the trend in the improvement of the release properties of the can achieved by the invention is the same. It is presumed that "trivial" effects like the inherently varying properties of the salmon already mentioned above cause the differences.

### Example 2.1

In another experiment a three layer polymer film made by co-extrusion from a feedblock-die system was used, comprising an adhesion layer, a bulk layer and a top product contact layer, using for the bulk layer a standard bottle grade PET and for the top product contact layer a standard bottle grade PET granulate blended with a standard PP granulate at different blend ratios, the rest of the experiment being performed in the same way as in Examples 1.1 and 1.2.

The sterilisation performance (hereafter also referred to as SP) of the polymer film was also considered by sterilising samples of the substrate coated with polymer film with the different top layer variants in salty water (saline test) for 90 minutes at 121 °C in the presence of air, in order to determine whether the invention can be used in practice for packaging products that are retorted.

The results are given in table 2.1.

As follows from the above results, the top layers with approx, 10 % PP in PET show superior release performance and adequate sterilisation performance.

As before, due to the nature of the experiment, the data vary from experiment to experiment Differences in e.g. the freshness of the fish are found to influence the release behaviour.

Again, in order to check the influence of different batches, a further trial using a three-layer polymer film was performed.

### Example 2.2

Example 2.1 was repeated with a different batch of salmon. The results are as shown in table 2.2. Again, the effect of the addition of PP to PET on the release properties was clear.

### Example 2.3

Example 2.2 was repeated with a different batch of salmon. The results are as shown in table 2.3. For the evaluation of the release behaviour, the weight of the adhering salmon retained (AR) is perceived as the most reliable indicator.

Again in this experiment, the effect of the addition of PP to PET on the release behaviour is clearly indicated.

As follows from the results the 20 % PP shows improved release behaviour as compared to 15 % PP.

This result indicates that 20 % PP is a further optimization of the release behaviour.

As release phenomena occur at the surface of the packaging material in contact with the filling, it will be dear that the effects of the invention are not limited to the embodiments of the invention in the examples, In particular regarding the used substrates. In other words the invention lies in realising a relatively uncomplicated polymer layer with good release properties.

| **Table 1.1** | **AR (g/can)** | **AC (%)** |
|---|---|---|
| PET (reference) | 6.9 | 30 |
| PET (reference) | 4.5 | 15 |
| PET (reference) | 7.9 | 35 |
| PET (reference) | 4.6 | 10 |
| PET (reference) | 5.8 | 35 |
| | | |
| 2% PP in PET | 6.3 | 25 |
| 2% PP in PET | 2.5 | 10 |
| 2% PP in PET | 3.3 | 15 |
| 2% PP in PET | 6.8 | 25 |
| 2% PP in PET | 2.8 | 5 |
| | | |
| 5% PP in PET | 4.5 | 10 |
| 5% PP in PET | 1.8 | 5 |
| 5% PP in PET | 3.7 | 20 |
| 5% PP in PET | 2.3 | 15 |
| 5% PP in PET | 3.7 | 10 |
| | | |
| 10% PP in PET | 2.2 | 10 |
| 10% PP in PET | 1.7 | 10 |
| 10% PP in PET | 1.1 | 5 |
| 10% PP in PET | 3 | 10 |
| | | |
| 25 % PP in PET | Stable polymer could not be produced | |
| 30% PP in PET | Stable polymer could not be produced | |
| 40% PP in PET | Stable polymer could not be produced | |

| **Table 1.2** | **AR (g/can)** | **AC (%)** |
|---|---|---|
| PET (reference) | 6.4 | 35 |
| PET (reference) | 15.8 | 35 |
| PET (reference) | 3.9 | 10 |
| PET (reference) | 6 | 20 |
| PET (reference) | 7.3 | 35 |
| PET (reference) | 9.5 | 65 |
| PET (reference) | 5.9 | 30 |
| PET (reference) | 7 | 30 |
| PET (reference) | 5.3 | 25 |
| PET (reference) | 7.7 | 40 |
| | | |
| 2% PP in PET | 3.7 | 15 |
| 2% PP in PET | 9.6 | 35 |
| 2% PP in PET | 4.4 | 10 |
| 2% PP in PET | 2.6 | 5 |
| 2% PP in PET | 3.4 | 15 |
| 2% PP in PET | 6.4 | 25 |
| 2% PP in PET | 3.6 | 25 |
| 2% PP in PET | 7.5 | 15 |
| 2% PP in PET | 5.1 | 20 |
| 2% PP in PET | 3.6 | 15 |
| | | |
| 10% PP in PET | 6.7 | 20 |
| 10% PP in PET | 4.8 | 10 |
| 10% PP in PET | 4.2 | 10 |
| 10% PP in PET | 7.7 | 15 |
| 10% PP in PET | 2.7 | 5 |
| 10% PP in PET | 1.6 | 5 |
| 10% PP in PET | 6.6 | 20 |
| 10% PP in PET | 10.4 | 45 |
| 10% PP in PET | 5.6 | 40 |
| 10% PP in PET | 4.4 | 5 |

| **Table 2.1** | **AR (g/can)** | **AC (%)** | **SP** |
|---|---|---|---|
| **top layer modification** | | | |
| PET (reference) | 6.4 | 35 | |
| PET (reference) | 15.8 | 35 | |
| PET (reference) | 3.9 | 10 | |
| PET (reference) | 6 | 20 | |
| PET (reference) | 7.3 | 35 | |
| PET (reference) | 9.5 | 65 | excellent |
| PET (reference) | 5.9 | 30 | |
| PET (reference) | 7 | 30 | |
| PET (reference) | 5.3 | 25 | |
| PET (reference) | 7.7 | 40 | |
| | | | |
| 10% PP in PET | 6.7 | 25 | |
| 10% PP in PET | 7.4 | 25 | |
| 10% PP in PET | 3.7 | 15 | |
| 10% PP in PET | 1.4 | 5 | |
| 10% PP in PET | 3.9 | 10 | adequate |
| 10% PP in PET | 10.2 | 40 | |
| 10% PP in PET | 5.9 | 15 | |
| 10% PP in PET | 3.5 | 15 | |
| 10% PP in PET | 4 | 15 | |
| 10% PP in PET | 4.5 | 15 | |

| **Table 2.2** | **AR (g/can)** | **AC (%)** | **SP** |
|---|---|---|---|
| **top layer modification** | | | |
| PET (reference) | 4.8 | 5 | |
| PET (reference) | 16.7 | 30 | |
| PET (reference) | 2.7 | 5 | |
| PET (reference) | 6.6 | 20 | |
| PET (reference) | 2.8 | 5 | excellent |
| PET (reference) | 4.3 | 10 | |
| PET (reference) | 3.4 | 10 | |
| PET (reference) | 1.9 | 5 | |
| PET (reference) | 2.9 | 5 | |
| PET (reference) | 2.1 | 5 | |
| | | | |
| 5% PP in PET | 2.2 | 10 | |
| 5% PP in PET | 4.1 | 10 | |
| 5% PP in PET | 14 | 20 | |
| 5% PP in PET | 1.6 | 5 | |
| 5% PP in PET | 2.8 | 10 | excellent |
| 5% PP in PET | 2.5 | 10 | |
| 5% PP in PET | 2 | 5 | |
| 5% PP in PET | 5.2 | 15 | |
| 5% PP in PET | 2.4 | 5 | |
| 5% PP in PET | 1.7 | 5 | |
| | | | |
| 10% PP in PET | 3.7 | 10 | |
| 10% PP in PET | 2.3 | 5 | |
| 10% PP in PET | 4.2 | 10 | |
| 10% PP in PET | 3.8 | 10 | |
| 10% PP in PET | 8.9 | 25 | adequate¹ |
| 10% PP in PET | 1.8 | 5 | |
| 10% PP in PET | 3.7 | 10 | |
| 10% PP in PET | 2.8 | 10 | |
| | | | |
| 15% PP in PET | 2 | 5 | |
| 15% PP in PET | 2 | 5 | |
| 15% PP in PET | 2.5 | 5 | |
| 15% PP in PET | 1.6 | 5 | |
| 15% PP in PET | 2.2 | 5 | |
| 15% PP in PET | 3.2 | 5 | good¹ |
| 15% PP in PET | 4.2 | 10 | |
| 15% PP in PET | 3.2 | 5 | |
| 15% PP in PET | 2.4 | 5 | |
| 15% PP in PET | 1.7 | 5 | |
| 15% PP in PET | 1.9 | 5 | |

| | | | |
|---|---|---|---|
| ¹ Surprisingly, SP at 15 % PP in PET is better than at 10 % PP in PET | | | |

| **Table 2.3** | **AR (g/can)** | **AC (%)** |
|---|---|---|
| **top layer modification** | | |
| PET (reference) | 2.5 | 5 |
| PET (reference) | 5.8 | 10 |
| PET (reference) | 15.4 | 15 |
| PET (reference) | 2.0 | 5 |
| PET (reference) | 5.1 | 10 |
| PET (reference) | 8.4 | 15 |
| PET (reference) | 6.3 | 10 |
| PET (reference) | 7.6 | 15 |
| PET (reference) | 12.1 | 30 |
| PET (reference) | 1.5 | 3 |
| | | |
| 15% PP in PET | 1.9 | 2 |
| 15% PP in PET | 9.4 | 25 |
| 15% PP in PET | 0.8 | 2 |
| 15% PP in PET | 1.3 | 5 |
| 15% PP in PET | 9.2 | 20 |
| 15% PP in PET | 1.6 | 10 |
| 15% PP in PET | 1.2 | 2 |
| 15% PP in PET | 3.5 | 10 |
| 15% PP in PET | 3.9 | 10 |
| | | |
| 20% PP in PET | 0.9 | 2 |
| 20% PP in PET | 6.1 | 8 |
| 20% PP in PET | 1.2 | 1 |
| 20% PP in PET | 1.1 | 1 |
| 20% PP in PET | 1.3 | 5 |
| 20% PP in PET | 1.1 | 1 |
| 20% PP in PET | 2.1 | 3 |
| 20% PP in PET | 5.0 | 15 |
| 20% PP in PET | 1.2 | 5 |
| 20% PP in PET | 1.6 | 1 |

## Claims

1. Use of a multi-layer system comprising at least three layers, the system containing a polymer material as a product contact layer in or on packaging for a product, the packaging comprising a metal substrate coated with the polymer material, wherein the polymer material is made from a blend of a polyester resin and a polyolefin so as to improve the product-release properties as compared to a material made from essentially the polyester resin.

2. Use according to claim 1, wherein the polyolefin is selected from PE, PP, and a copolymer comprising PE and PP such as EPDM.

3. Use according to any of the preceding claims, wherein the polyolefin is modified PP.

4. Use according to claim 3, wherein the polyolefin is maleic acid anhydride modified PP.

5. Use according to any of the preceding claims, wherein the polyester is PET or modified PET or PEI or PBT and combinations thereof.

6. Use according to any of the preceding claims, wherein the polymer material is coated onto a substrate in the form of a film before the substrate is formed into packaging.

7. Use according to any of the preceding claims, wherein the polymer material is directly extruded onto a substrate before the substrate is formed into packaging.

8. Use according to any of the preceding claims, wherein the polymer material is coated onto a packaging steel substrate, such as a TFS/ECCS steel substrate.

9. Packaging for a product wherein the packaging comprises a multi-layer system comprising at least three layers, the system containing a polymer material as a product contact layer which in use contacts the product, the packaging comprising a metal substrate coated with the polymer material, wherein the polymer material is made from a blend of a polyester resin and a polyolefin so as to improve the product-release properties as compared to a polymer material made from essentially the polyester resin.

10. Packaging according to claim 9, wherein the polyolefin is selected from PE, PP, and a copolymer comprising PE and PP such as EPDM.

11. Packaging according to claims 9 or 10, wherein the polyolefin is modified PP.

12. Packaging according to any of claims 9 to 11, wherein the polyolefin is maleic acid anhydride modified PP.

13. Packaging according to any of claims 9 to 12, wherein the polyester is PET or modified PET or PEI or PBT and combinations thereof.

14. Packaging according to any of claims 9 to 13, wherein the packaging comprises a packaging steel substrate, such as a TFS/ECCS steel substrate, coated with the polymer material.

15. Packaging according to claim 14, wherein the polymer material is coated onto at least one side of the substrate in the form of a film, before the substrate is formed into packaging.

16. Packaging according to claim 15, wherein the polymer material is directly extruded onto at least one side of the substrate before the substrate is formed into packaging.

## Patentansprüche

1. Verwendung eines Mehrschicht- bzw. mehrschichtigen bzw. mehrlagigen Systems, das wenigstens drei Schichten umfasst, wobei das System ein Polymermaterial als eine Produktkontaktschicht in oder auf einer Verpackung für ein Produkt enthält, wobei die Verpackung ein mit dem Polymermaterial beschichtetes Metallsubstrat umfasst, wobei das Polymermaterial aus einer Mischung aus einem Polyesterharz und einem Polyolefin hergestellt ist, um die Produktfreigabeeigenschaften im Vergleich zu einem Material, das im Wesentlichen aus Polyesterharz besteht, zu verbessern.

2. Verwendung nach Anspruch 1, bei der das Polyolefin aus PE, PP und einem Copolymer, das PE und PP wie beispielsweise EPDM umfasst, ausgewählt ist.

3. Verwendung nach einem der vorhergehenden Ansprüche, bei der das Polyolefin modifiziertes PP ist.

4. Verwendung nach Anspruch 3, bei der das Polyolefin maleinsäureanhydridmodifiziertes PP ist.

5. Verwendung nach einem der vorhergehenden Ansprüche, bei der das Polyester PET ist oder modifiziertes PET oder PEI oder PBT und Kombinationen hieraus.

6. Verwendung nach einem der vorhergehenden Ansprüche, bei der ein Substrat mit dem Polymermaterial in Form eines Films beschichtet wird, bevor das Substrat zur Verpackung geformt wird.

7. Verwendung nach einem der vorhergehenden Ansprüche, bei der das Polymermaterial direkt auf ein Substrat extrudiert wird, bevor das Substrat zur Verpackung geformt wird.

8. Verwendung nach einem der vorhergehenden Ansprüche, bei der ein Verpackungsstahlsubstrat, wie beispielsweise ein TFS/ECCS Stahlsubstrat, mit dem Polymermaterial beschichtet wird.

9. Verpackung für ein Produkt, bei dem die Verpackung ein Mehrschicht- bzw. mehrlagiges System umfasst, das wenigstens drei Schichten umfasst, wobei das System ein Polymermaterial als eine Produktkontaktschicht, die bei Gebrauch mit dem Produkt in Kontakt kommt, enthält, wobei die Verpackung ein mit dem Polymermaterial beschichtetes Metallsubstrat umfasst, wobei das Polymermaterial aus einer Mischung aus einem Polyesterharz und einem Polyolefin hergestellt ist, um die Produktfreigabeeigenschaften im Vergleich zu einem Polymermaterial, das im Wesentlichen aus Polyesterharz besteht, zu verbessern.

10. Verpackung nach Anspruch 9, bei der das Polyolefin aus PE, PP und einem Polymer, das PE und PP wie beispielsweise EPDM umfasst, ausgewählt ist.

11. Verpackung nach den Ansprüchen 9 oder 10, bei der das Polyolefin modifiziertes PP ist.

12. Verpackung nach einem der Ansprüche 9 bis 11, bei der das Polyolefin maleinsäureanhydridmodifiziertes PP ist.

13. Verpackung nach einem der Ansprüche 9 bis 12, bei der das Polyester PET ist oder modifiziertes PET oder PEI oder PBT und Kombinationen hieraus.

14. Verpackung nach einem der Ansprüche 9 bis 13, bei der die Verpackung ein Verpackungsstahlsubstrat, wie beispielsweise ein TFS/ECCS Stahlsubstrat, umfasst, das mit dem Polymermaterial beschichtet ist.

15. Verpackung nach Anspruch 14, bei der wenigstens eine Seite des Substrats mit dem Polymermaterial in Form eines Films beschichtet wird, bevor das Substrat zur Verpackung geformt wird.

16. Verpackung nach Anspruch 15, bei der das Polymermaterial direkt auf wenigstens eine Seite des Substrats extrudiert wird, bevor das Substrat zur Verpackung geformt wird.

## Revendications

1. Utilisation d'un système multicouche comprenant au moins trois couches, lequel système contient un matériau polymère qui constitue, dans ou sur l'emballage d'un produit, la couche en contact avec le produit, ledit emballage comprenant un substrat métallique revêtu dudit matériau polymère, lequel matériau polymère est fait d'un mélange d'une résine polyester et d'une polyoléfine, de manière à ce que ledit matériau polymère puisse mieux se décoller du produit qu'un matériau essentiellement fait de la résine polyester.

2. Utilisation conforme à la revendication 1, pour laquelle la polyoléfine est choisie parmi un polyéthylène PE, un polypropylène PP, et un copolymère comprenant des motifs de PE et de PP, tel un polymère EPDM.

3. Utilisation conforme à l'une des revendications précédentes, dans laquelle la polyoléfine est un polypropylène modifié.

4. Utilisation conforme à la revendication 3, dans laquelle la polyoléfine est un polypropylène modifié avec de l'anhydride maléique.

5. Utilisation conforme à l'une des revendications précédentes, dans laquelle le polyester est un poly(éthylène téréphtalate) PET, un poly-(éthylène téréphtalate) modifié, un poly(éthylène isophtalate) PEI, ou un poly(butylène téréphtalate) PBT, ou encore une combinaison de tels polyesters.

6. Utilisation conforme à l'une des revendications précédentes, pour laquelle le substrat a été revêtu d'un film du matériau polymère avant d'avoir été façonné pour former un emballage.

7. Utilisation conforme à l'une des revendications précédentes, pour laquelle le matériau polymère a été directement étalé sur le substrat, par extrusion, avant que le substrat ait été façonné pour former un emballage.

8. Utilisation conforme à l'une des revendications précédentes, pour laquelle le matériau polymère a été étalé sur un substrat d'emballage en acier, par exemple un substrat en acier TFS/ECCS (acier sans étain)/(acier revêtu de chrome par voie électrolytique).

9. Emballage de produit, lequel emballage comprend un système multicouche comprenant au moins trois couches, lequel système contient un matériau polymère qui constitue la couche de contact avec le produit, qui touche le produit quand l'emballage est en service, ledit emballage comprenant un substrat métallique revêtu dudit matériau polymère, lequel matériau polymère est fait d'un mélange d'une résine polyester et d'une polyoléfine, de manière à ce que ledit matériau polymère puisse mieux se décoller du produit qu'un matériau essentiellement fait de la résine polyester.

10. Emballage conforme à la revendication 9, pour lequel la polyoléfine est choisie parmi un polyéthylène PE, un polypropylène PP, et un copolymère comprenant des motifs de PE et de PP, tel un polymère EPDM.

11. Emballage conforme à la revendication 9 ou 10, dans lequel la polyoléfine est un polypropylène modifié.

12. Emballage conforme à l'une des revendications 9 à 11, dans lequel la polyoléfine est un polypropylène modifié avec de l'anhydride maléique.

13. Emballage conforme à l'une des revendications 9 à 12, dans lequel le polyester est un poly(éthylène téréphtalate) PET, un poly(éthylène téréphtalate) modifié, un poly(éthylène isophtalate) PEI, ou un poly-(butylène téréphtalate) PBT, ou encore une combinaison de tels polyesters.

14. Emballage conforme à l'une des revendications 9 à 13, lequel emballage comprend un substrat d'emballage en acier, par exemple un substrat en acier TFS/ECCS, revêtu du matériau polymère.

15. Emballage conforme à la revendication 14, dans lequel au moins une face du substrat a été revêtue d'un film du matériau polymère avant que le substrat ait été façonné pour former un emballage.

16. Emballage conforme à la revendication 15, dans lequel le matériau polymère a été directement étalé sur au moins une face du substrat, par extrusion, avant que le substrat ait été façonné pour former un emballage.
